Europäisches Patentamt

European Patent Office

Office européen des brevets

(11) Veröffentlichungsnummer: **0 427 668 A1**

# EUROPÄISCHE PATENTANMELDUNG

(21) Anmeldenummer: **90810824.4**

(22) Anmeldetag: **29.10.90**

(51) Int. Cl.5: **H01R 43/058**

(30) Priorität: **07.11.89 CH 4007/89**
**23.04.90 CH 1365/90**

(43) Veröffentlichungstag der Anmeldung:
**15.05.91 Patentblatt 91/20**

(84) Benannte Vertragsstaaten:
**CH DE FR GB IT LI**

(71) Anmelder: **Blecher, Ulrich**
**Sonnenbergstrasse 51**

CH-6060 Sarnen(CH)

(72) Erfinder: **Blecher, Ulrich**
**Sonnenbergstrasse 51**
**CH-6060 Sarnen(CH)**

(74) Vertreter: **Breiter, Heinz**
**Patentanwalt H. Breiter AG**
**Schaffhauserstrasse 27 Postfach 1163**
**CH-8401 Winterthur(CH)**

(54) **Crimpmaschine.**

(57) Die Crimpmaschine hat wenigstens ein in eine programmgesteuert antreibbare Presse eingebautes Crimpwerkzeug (10), das im wesentlichen einen über eine Sockelplatte (14) lösbar mit der Presse verbundenen Ständer (12) als Stösselführung, einen Werkzeugstössel (16) als Crimpertrager und eine Trägerbandführung (18) als Ambossträger umfasst,

Ein einzeln auswechselbarer Werkzeugstössel (16) und/oder eine einzeln auswechselbare Trägerbandführung (18) ist/sind über Verschlüsse, insbesondere Schnellverschlüsse, an der Stösselführung (12, 14) mittels Präzisisionsführungen und -anschlägen positionierbar.

Alle Verfahrensschritte zum Auswechseln der als Werkzeugteile bezeichneten Werkzeugstössel (16) und Trägerbandführung (18) werden vorzugsweise voll automatisiert, wenigstens in bezug auf die Endlage der eingesetzten Werkzeugteile (16, 18) durch Sensoren kontrolliert, durchgeführt.

## Fig. 1

EP 0 427 668 A1

## CRIMPMASCHINE

Die Erfindung bezieht sich auf eine Crimpmaschine mit wenigstens einem in eine programmgesteuert antreibbare Presse eingebauten Crimpwerkzeug, das im wesentlichen einen über eine Sockelplatte lösbar mit der Presse verbundenen Ständer als Stösselführung, einen Werkzeugstössel als Crimperträger und eine Trägerbandführung als Ambossträger umfasst. Weiter bezieht sich die Erfindung auf ein Verfahren zum Auswechseln wenigstens eines Verschleissteils des Crimpwerkzeugs/der Crimpwerkzeuge in einer Crimpmaschine.

Eine Crimpmaschine besteht im einfachsten Fall aus einer Presse mit einem eingebauten Crimpwerkzeug. Moderne Pressen selbst dieser einfachen Art sind fast durchwegs mit einem Prozessor oder Mikroprozessor und einem zugeordneten Tastenfeld ausgerüstet. Die Presskraft wird mittels eines elektro-mechanisch betätigten Kniehebels, pneumatisch oder hydraulisch erzeugt und liegt meist im Bereich von 2000 bis 10000 kp. In weiteren Ausbaustufen umfasst eine Crimpmaschine mehrere Pressen mit je einem Crimpwerkzeug. Das Spektrum reicht bis zur vollautomatischen Crimpmaschine, welche neben den eigentlichen Pressen mit dem Crimpwerkzeug Vorrichtungen zum Ablängen, Abisolieren, Verdrillen, Verzinnen, Verformen, Bedrucken usw. beinhalten kann.

Konventionelle, von einer Presse betriebene einfache oder doppelte Crimpwerkzeuge sind stets applikationsspezifisch, d.h. pro Querschnitt, Blechdicke und oft auch pro Material ist ein Crimpwerkzeug notwendig. So sind beispielsweise bei einer wichtigen Anwendung der Elekroindustrie, dem Herstellen von Steckern und Buchsen, zwei Crimpwerkzeuge notwendig.

Crimpwerkzeuge arbeiten mit hohen Frequenzen, früher waren 2000 Schläge pro Stunde üblich, heute wird auf 3 bis 4000 Schläge pro Stunde übergegangen. Diese Leistungsfähigkeit führt zu einer sehr grossen Beanspruchung der Crimpwerkzeuge, insbesondere der Verschleissteile. Dies kann zu Defekten führen, wobei in heute üblichen Crimpmaschinen das ganze Crimpwerkzeug ausgewechselt werden muss, was wegen des Einjustierens des Trägerbandes in situ bis zu einer halben Stunde dauert. Bei einem Vollautomaten sind mehrere, bis acht Pressen angeordnet, was die Zugänglichkeit erschwert. Erleidet ein Crimpwerkzeug in einer Crimpmaschine einen Defekt, so muss die ganze Crimpmaschine zur Ausführung der Reparatur längere Zeit abgestellt werden, was bei den hohen Investitionskosten einen empfindlichen Verlust an Wirtschaftlichkeit bedeutet.

Ein weiterer Unkostenfaktor bekannter Anlagen besteht darin, dass für die verschiedenen Querschnitte der Werkstücke, verschiedenen Blechdikken und verschiedenen Materialien eine grosse Anzahl von kompletten Crimpwerkzeugen an Lager gehalten werden muss.

Die Verschleissteile eines Crimpwerkzeugs sind in bekannter Weise als Crimper und Amboss ausgebildet, wobei der Crimper einen im wesentlichen V-förmigen Ausschnitt hat, in welchen der Amboss bei eingelegtem Werkstück mit genügend Spiel eingreift. Das Werkstück wird auf dem Amboss liegend zugfest verformt. Das Verbindungselement ist nach einer häufigen Variante U-förmig ausgebildet, mit in Richtung des Cimpers offenen Schenkeln. Diese werden beim Crimpschlag in den V-förmigen Ausschnitt gedrückt, umgelegt und unter Verdichtung des Werkstücks verquetscht.

Der vorliegenden Erfindung liegt die Aufgabe zugrunde, eine Crimpmaschine der eingangs beschriebenen Art und ein Verfahren zum Auswechseln wenigstens eines Verschleissteils des Crimpwerkzeugs/der Crimpwerkzeuge zu schaffen, welche die Vorrichtung des obenstehenden Patentgesuchs sinnvoll ergänzen bzw. eine alternative Lösung bieten. Die Crimp maschine soll weiter universell verwendbar sein, Platzsparend arbeiten und bei günstigen Investitions- und Betriebskosten qualitativ hochwertige Produkte liefern.

In bezug auf die Vorrichtung wird die Aufgabe erfindungsgemäss durch ein Crimpwerkzeug mit über Verschlüsse, insbesondere über Schnellverschlüsse, an der Stösselführung befestigten, einzeln auswechselbaren Werkzeugstössel und/oder Trägerbandführung, welche/r mittels Präzisionsführungen und -anschlägen positionierbar ist/sind, gelöst. Vorteilhafte Weiterbildungen der Erfindung sind Gegenstand von abhängigen Patentansprüchen.

Dem Fachmann sind Schnellverschlüsse, insbesondere auch automatisch betätigbare, in grosser Anzahl bekannt. Damit können Werkzeugteile mit einer einfachen Bewegung exakt positioniert und wieder gelöst werden.

Ein mit Schnellverschlüssen in zwei oder drei Werkzeugteile zerlegbares Crimpwerkzeug erlaubt ein rasches Auswechseln von defekten Verschleissteilen mit einem Betriebunterbruch, der höchstens in der Grössenordnung von einer Minute liegt. Dies ist insbesondere möglich, weil eine zu ersetzende Trägerbandführung mit einem bereits auf Vorrat einjustierten Trägerband eingewechselt wird.

Schliesslich kann die Lagerhaltung, und damit gebundenes Betriebskapital, vermindert werden, indem nur ein Teil des Crimpwerkzeugs auswechselbar sein muss. Die praktisch keinem Verschleiss unterworfene Stösselführung ist für alle Werkzeugstössel und Trägerbandführungen dieselbe.

Bei einer einfachen Crimpmaschine, welche eine Presse mit einem einfachen oder doppelten Crimpwerkzeug umfasst, erfolgt die Auswechslung eines defekten Werkzeugstössels und/oder einer defekten Trägerbandführung, letztere bei einer Verwendung für elektrische Bauteile auch Kontaktbandführung genannt, zweckmässig manuell. Dasselbe gilt für das Auswechseln von Werkzeugteil en bei einer Programmänderung, falls die Verschleissteile bei geringerem Zeitdruck nicht in konventioneller Weise an Ort und Stelle aus- und eingebaut werden.

Bei einer teuren Crimpmaschine dagegen, welche bis zu acht Pressen mit je einem Crimpwerkzeug und weitere funktionelle Vorrichtungen aufweisen kann, ist die manuelle Zugänglichkeit beschränkt. In einer derartigen Anlage sind alle Funktionen bevorzugt vollautomatisiert, also auch das Ab- und Zuführen der Werkzeugstössel und/oder Trägerbandführungen beim automatisierten Auswechseln. Bei diesen komplexen Crimpmaschinen ist von wesentlicher Bedeutung, dass bei einem Defekt oder Programmwechsel die Betriebsunterbruchszeit kurz ist.

Transportmittel für die Weg- und Zuführung von Teilen von Crimpwerkzeugen sind beispielsweise ein wenigstens teilweise flexibler Ladetunnel, welcher heb-, senk- und schwenkbar ist. Die Werkzeugteile werden darin mit einer Zug- oder Stossvorrichtung, beispielsweise einem Seilzug, oder einer pneumatischen Rohrförderung bewegt, welche letztere nach dem Prinzip der bekannten Rohrpost arbeiten.

Selbstverständlich können im Rahmen der Erfindung auch einem Ladetunnel äquivalente Transportmittel eingesetzt werden, wie z.B. Schienensysteme, Aufhängesysteme und dgl.

Ein weiterer, insbesondere bei Vollautomaten wesentlicher Automatisierungsschritt besteht darin, die einzuwechselnden Crimpwerkzeugteile in lageveränderbaren Magazinfächern zu lagern. Diese programmgesteuert anwählbaren Magazinfächer können so verschoben werden, dass der einzuwechselnde Werkzeugteil, sei es ein Werkzeugstössel oder eine Trägerbandführung, direkt oder über ein oben erwähntes Transportmittel zum Stösselträger mit geöffneten Schnellverschlüssen geführt wird. Jedes derartige Magazin weist wenigstens ein leeres Fach auf, damit vorerst der auszuwechselnde Werkzeugteil eingelagert werden kann.

Als besonders vorteilhafte Magazine für Werkzeugstössel haben sich Trommelmagazine mit vertikaler Achse erwiesen. Für Trägerbandführungen dagegen werden Liftschachtmagazine, auch Paternoster genannt, bevorzugt verwendet.

Bei der Anordnung von Magazinen und/oder Transportmitteln in Vollautomaten muss stets darauf geachtet werden, dass das Werkstück für die Crimpverbindung, welches einige Zentimeter bis mehrere Meter lang sein kann, auch noch automatisch zu- und abgeführt werden muss.

Die Zufuhr der Trägerbandführungen ist insofern problematischer, als die im Magazin eingelagerten Werkzeugteile stets mit einem einjustierten Trägerband versehen sind. Zweckmässig werden die Haspeln für die Trägerbänder aller arbeitenden und gelagerten Trägerbandführungen unverschiebbar gelagert, insbesondere im Bereich der Raumdecke, wodurch sie die Einengung des Freiheitsraums im Bereich der Crimpmaschine am wenigsten einschränken.

Vorzugsweise sind die Trägerbänder zwischen der Haspel und der Trägerbandführung mittels einer auf einem schwenkbaren Arm befestigten Ausgleichsrolle gespannt.

Ein dem erfindungsgemäss möglichen, ausserordentlich schnellen Werkzeugwechsel anzuhaften befürchteter Nachteil, Crimper und Amboss nicht an Ort und Stelle aufeinander justieren zu können, hat sich als unbegründet erwiesen. Durch die erfindungsgemässe Anordnung von präzisen Führungen und Anschlägen sind die Werkzeugteile mit einer Genauigkeit von wenigen Hundertstelmillimetern positionierbar, was auch hohen Ansprüchen genügt.

Nach einer speziellen Weiterausbildung der Erfindung kann der Amboss flexibel eingebaut sein, mit einer Verschiebungsmöglichkeit von einigen Zehntelsmillimetern in waagrechter Richtung der Plattenflächen. In der Schlussphase des ersten Crimpschlages wird der eingespannt aufliegende Amboss in die endgültige Position gebracht.

Die Anordnung von anwählbaren Magazinfächern und allenfalls Transportmitteln für Werkzeugstössel und Trägerbandführungen kann, insbesondere in Vollautomaten mit mehreren Pressen, zu Platzproblemen führen.

Nach einer besonders vorteilhaften Weiterausbildung der Erfindung umfasst deshalb der Werkzeugstössel eines Crimpwerkzeugs wenigstens eine Gruppe von einzeln in eine justierbare Position dreh- und/oder verschiebbaren Crimpern mit dem zugeordneten Amboss entsprechendem Crimpprofil. Tritt in einem Crimper ein Defekt auf, kann ein neuer Crimper eingedreht und/oder hingeschoben werden. Ist ein Amboss defekt, wird die Trägerbandführung ausgewechselt, der Crimper kann derselbe bleiben oder gleichzeitig ohne Werkzeugstösselaustausch gewechselt werden. Mit dieser Ausführungsvariante können alle Vorteile der Erfindung erreicht werden, insbesondere das schnelle Auswechseln der Trägerbandführung mit vorher einjustiertem Trägerband, jedoch mit insgesamt weit geringerem Platzbedarf.

Bei einem Programmwechsel kann der Werkzeugstössel, falls er nicht verschiedene Crimpprofile aufweist, ebenfalls ausgewechselt werden. Da ein solcher Wechsel weniger häufig ist und unter geringerem Zeitdruck steht, kann der Werkzeugstössel konventionell oder mit einem Schnellverschluss ausgewechselt werden.

Für derartige, mehrteilige Crimper wird auf das bereits erwähnte schweizerische Patentgesuch Nr. 04 007/89-3 des Anmelders verwiesen.

Weiter kann eine Gruppe von Crimpern starr auf einem dreh-und schwenkbaren Kugelkopf angeordnet sein. Diese Lösung entspricht dem Prinzip eines Kugelkopfs einer vergangenen Schreibmaschinengeneration. Auf die Crimppresse angewendet kann sich der Kugelkopf um eine horizontale Achse vollständig drehen, um die andere, rechtwinklig dazu verlaufende Horizontalachse kann er jedoch nur teilweise geschwenkt werden.

Aehnliche Gruppen von Crimpern in Werkzeugstösseln bieten sich mit verschiedenen Bauformen von Revolverköpfen an.

Schliesslich kann eine Gruppe von Crimpern in je einer linearen, parallel zu den Plattenflächen verlaufenden Führung, insbesondere einer Führungsschiene, verschiebbar sein. In diesem Fall ist keine Drehbewegung von Crimpwerkzeugen notwendig.

In bezug auf das Verfahren zum Auswechseln von wenigstens einem Verschleissteil des Crimpwerkzeugs/der Crimpwerkzeuge in einer Crimpmaschine wird die Aufgabe erfindungsgemäss dadurch gelöst, dass die Verschlüsse des/der betreffenden Werkzeugteils/Werkzeugteile geöffnet, der/die Werkzeugteil/e direkt oder über Transportmittel in ein leeres Magazinfach geführt, das/die verschiebbare/n Magazinfach/Magazinfächer mit dem/den einzuwechselnden Werkzeugteil/en angewählt, dieser/diese direkt oder über Transportmittel zur betreffenden Stösselführung geleitet, positioniert und mit den Schnellverschlüssen befestigt wird/werden, wobei alle Verfahrensschritte zum Auswechseln der als Werkzeugteile bezeichneten Werkzeugstössel und Trägerbandführung (18) voll automatisiert, wenigstens in bezug auf die Endlage der eingesetzten Werkzeugteile durch Sensoren kontrolliert, durchgeführt werden.

Weist ein Werkzeugstössel wenigstens eine Gruppe von Crimpern auf, auch Mehrfachcrimper genannt, wird bei stationä rem Werkzeugstössel ein zu ersetzender Crimper sensor- oder programmgesteuert weggeschwenkt und/oder weggeschoben. Gleichzeitig oder unmittelbar nachher wird, ebenfalls sensor- oder programmgesteuert, ein neuer Crimper zugeschwenkt und/oder zugeschoben und positioniert.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine Ansicht eines Crimpwerkzeugs,
- Fig. 2 eine Ansicht eines verschiebbaren, festgeklemmten Ambosses,
- Fig. 3 eine Draufsicht auf Fig. 2,
- Fig. 4 eine Draufsicht auf Transportmittel für die Werkzeugteile,
- Fig. 5 eine Draufsicht auf ein Werkzeug mit beigestellten Magazinfächern,
- Fig. 6 eine Ansicht von Fig. 5, mit der Zufuhr von Trägerbändern,
- Fig. 7 einen dreiteiligen Crimper,
- Fig. 8 einen sechsteiligen Crimper,
- Fig. 9 einen dreh- und verschiebbaren Crimper, und
- Fig. 10 einen dreh- und schwenkbaren Crimper.

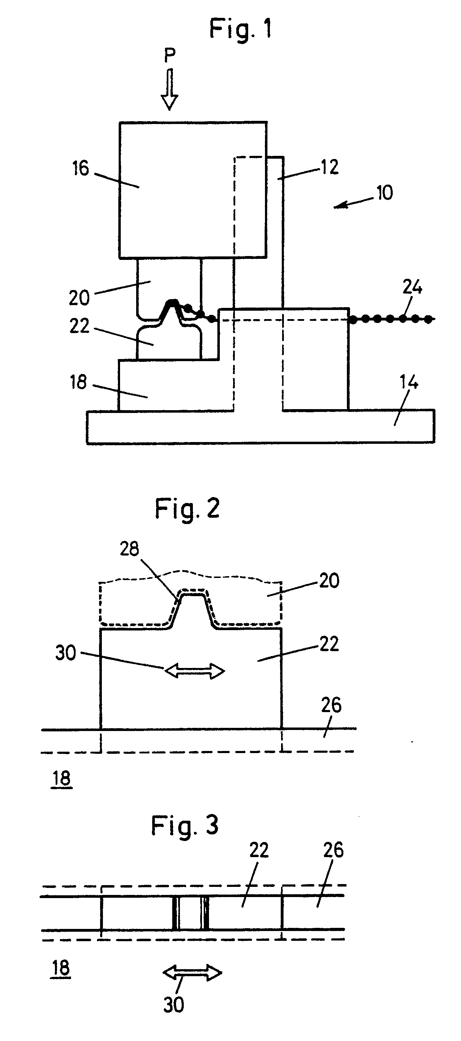

Ein in Fig. 1 dargestelltes Crimpwerkzeug 10 ist, wie alle folgenden, AMP-kompatibel, d.h. in jede Presse einsetzbar. Der Ständer 12 des Crimpwerkzeugs 10 wird über eine Sockelplatte 14 mit einer nicht dargestellten Presse verbunden. Der Ständer 12 und die Sockelplatte 14 bilden eine Stösselführung.

Die nicht dargestellte Presse übt auf einen entlang der Stösselführung gleitenden Werkzeugstössel 16 bei der Betätigung eine Kraft P aus, welche zwischen 2000 und 10000 kp liegt. Dieser Werkzeugstössel 16 ist, wie eine Trägerband führung 18, mit Schnellkupplungen an sich bekannter Bauart an der Stösselführung automatisch lösbar befestigt.

Der Werkzeugstössel 16 trägt einen Crimper 20, ein Amboss 22 ist an der Trägerbandführung 18 befestigt. Die Verschleissteile, wie Crimper 20 und Amboss 22 auch genannt werden, sind der Uebersichtlichkeit wegen stark vergrössert gezeichnet.

In die Trägerbandführung 18 läuft, wie dies der Namen sagt, ein Trägerband 24 aus Metall oder Kunststoff ein und wird, zusammen mit einem nicht gezeigten Werkstück, vor jedem Schlag der Presse zur Bildung einer Crimpverbindung zwischen die Verschleissteile 20, 22 geleitet.

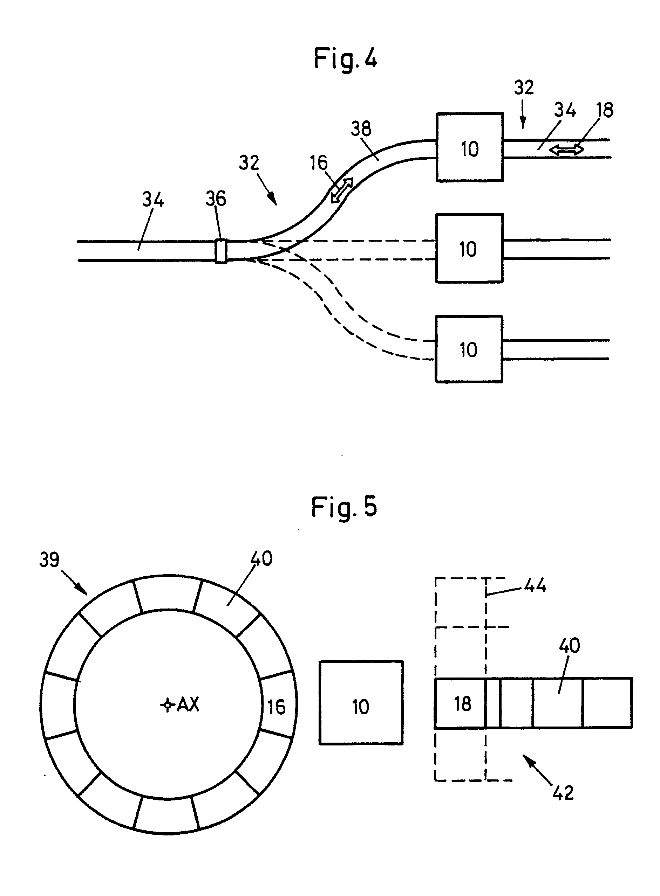

In Fig. 2 und 3 wird das Prinzip eines sich beim ersten Crimpschlag selbstjustierenden Ambosses 22 gezeigt. Der Ambossfuss ist in einer Schwalbenschwanznut 26 der Trägerbandführung 18 leicht klemmend eingesetzt. Beim Einsetzen der Trägerbandführung 18 liegt der Amboss 22 höchstens einige Zehntelmillimeter von seiner Arbeitsposition entfernt. Beim ersten Schlag des in Fig. 2 punktiert angedeuteten Crimpers 20 kann sich der Amboss in der Schlussphase des Schlags, während welcher die Crimpprofile 28 aufeinanderliegen, allenfalls noch einige Zehntelmillimeter in einer Richtung des Pfeils 30 verschieben. Nun ist der Amboss 22 in der richtigen Position. Das leichte Anklemmen verhindert, dass sich der Amboss bei normaler Handhabung der Werkzeugteile verschieben kann, erlaubt jedoch bei einem kraftvollen Crimpschlag eine erneute Verschiebung in einer Richtung des Pfeils 30. Senkrecht zur Zeichnungsebene von Fig. 2 dagegen kann der Amboss 22 nicht verschoben werden.

Fig. 4 zeigt eine Teildraufsicht auf eine Crimpmaschine mit drei Pressen, die je ein Crimpwerkzeug 10 antreiben. Diese Crimpwerkzeuge 10 sind gemäss Fig. 1 durch Lösen von Schnellverschlüssen in drei Teile zerlegbar, die stationäre Stösselführung 12, 14, den Werkzeugstössel 16 und die Trägerbandführung 18.

Transportmittel 32, welche im vorliegenden Fall einerseits aus einem starren Rohr 34 und einem über eine Rohrkupplung 36 anschliessbaren flexiblen Rohr 38 bzw. andrerseits aus einem starren Rohr 34 bestehen.

Erleidet ein Crimper 20 eines Werkzeugstössels 16 (Fig. 1) einen Defekt, so wird das flexible Rohr 38 am betreffenden Crimpwerkzeug 10 angelegt, die Schnellkupplungen automatisch geöffnet und der Werkzeugstössel 16, wie mit dem entsprechend bezeichneten Pfeil angedeutet, über die linken Transportmittel 32 ersetzt. Im vorliegenden Fall handelt es sich um eine pneumatisch arbeitende "Rohrpostleitung". Das Transportmittel 32 für den Werkzeugstössel 16 setzt ohne weitere Massnahmen voraus, dass alle drei Crimpwerkzeuge 10 den gleichen Crimper haben. Andernfalls müsste ein werkzeugspezifischer Werkzeugstössel in das linke Rohr 34 eingeleitet werden.

Das rechtsseitig dargestellte Transportmittel 32 besteht aus je einem zum betreffenden Crimpwerkzeug 10 führenden starren Rohr 34. Bei einem Wechsel der Trägerbandführung 18, ebenfalls mit einem entsprechend bezeichneten Pfeil angedeutet, erfolt die Neubestückung ausschliesslich werkzeugspezifisch.

Links vom in Fig. 5 gezeichneten Crimpwerkzeug 10 ist ein um eine senkrechte Achse AX drehbares Trommelmagazin 39 dargestellt. Dieses hat 12 Magazinfächer 40 für je einen Werkzeugstössel 16. Bei arbeitendem Crimpwerkzeug 10 ist das benachbarte Magazinfach 40 zweckmässig leer.

Beim Auswechseln des Werkzeugstössels 16 werden wiederum die Schnellkupplungen automatisch gelöst und der auszuwechselnde Werkzeugstössel in ein leeres Magazinfach 40 ge bracht. Darauf wird das Trommelmagazin 38 programmiert gesteuert gedreht, bis der richtige Werkzeugstössel 16 benachbart dem Crimpwerkzeug 10 ist (Fig. 5). Darauf wird der neue Werkzeugstössel 16 zur Stösselführung 12, 14 gebracht, gegebenenfalls über ein in Fig. 4 dargestelltes Transportmittel 32.

Es können mehrere Trommelmagazine 39 an einer höhenverstellbaren Drehachse AX angeordnet sein, was die Anzahl der anwählbaren Magazinfächer 40 vervielfacht.

Rechts des Crimpwerkzeugs 10 ist ein höhenverstellbarer Liftschacht 42 mit mehreren untereinander bzw. im unten ausgelenkten Teil nebeneinander liegenden Magazinfächern 40 angedeutet. Bei arbeitendem Crimpwerkzeug 10 ist vorteilhaft wiederum ein leeres Magazinfach 40 benachbart angeordnet. Das Auswechseln erfolgt analog zum oben für das Trommelmagazin 38 beschriebene.

Die gestrichelten Linien 44 deuten an, dass mehrere unten ausgelenkte Liftschächte nebeneinander angeordnet sein können, in diesem Fall ist nicht nur die Höhen-, sondern auch eine seitliche Verschiebung möglich. Damit wird die Anzahl zur Verfügung stehender Magazinfächer stark erhöht.

Ein im Zentrum von mehreren Crimpwerkzeugen 10 liegender Liftschacht 18 ohne unten ausgelenkten Teil kann durch Ausstossen auf beiden Seiten und/oder durch Drehen mehrere Werkzeuge 10 bedienen. Aus Platzgründen ist dabei jedoch das Trommelmagazin in der Regel durch geeignete platzsparende Mittel zu ersetzen, welche später beschrieben werden.

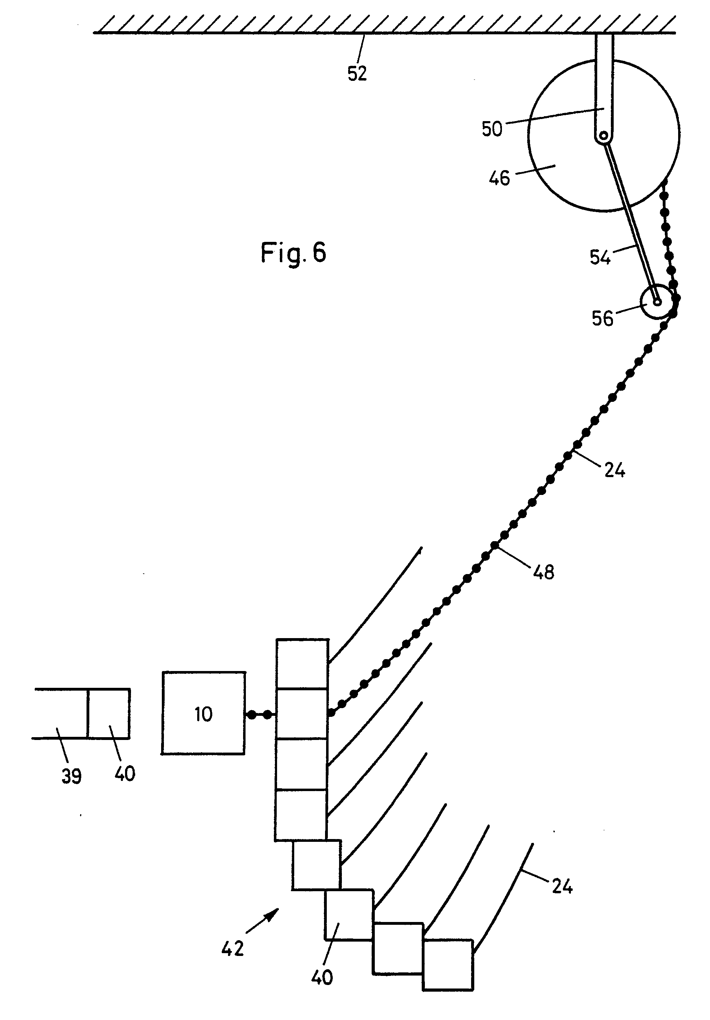

Fig. 6 zeigt ein Crimpwerkzeug 10, einen Teil eines Trommelmagazins 39 und einen unten fächerweise ausgelenkten Liftschacht 42. Selbstverständlich können die Magazinfächer auch rein vertikal oder auch oben ausgelenkt geführt sein.

Im vorliegenden Fall ist die Trägerbandführung des nun leeren zweitobersten Magazinfachs 40 im Einsatz. In den übrigen Fächern 40 ist je eine Trägerbandführung mit einjustiertem Trägerband 24 einsatzbereit. Durch Verschieben des Liftschachts 42 kann jede geeignete Trägerbandzuführung sofort, praktisch ohne Betriebsunterbruch, eingewechselt werden. Selbstverständlich gilt das auch für die in den Magazinfächern 40 des Trommelmagazins 39 gelagerten Werkzeugstössel.

Die Haspel 46 des im Einsatz befindlichen Trägerbands 24, welches übertrieben gross gezeichnete Verbindungselemente 48 hat, ist über eine Gabel 50 an der Raumdecke 52 befestigt. Die übrigen in eine Trägerbandführung einjustierten Trägerbänder 24 sind nur ansatzweise gezeichnet. Sie führen jedoch alle zu einer ebenfalls an der Decke 52 aufgehängten Haspel 46.

Alle Trägerbänder 24 haben eine mittels eines Arms 54 schwenkbare Spannrolle 56. Diese gleichen verschiedene Niveaulagen des Liftschachts 42 aus und sind besorgt, dass die Transportbänder 24 geordnet bleiben.

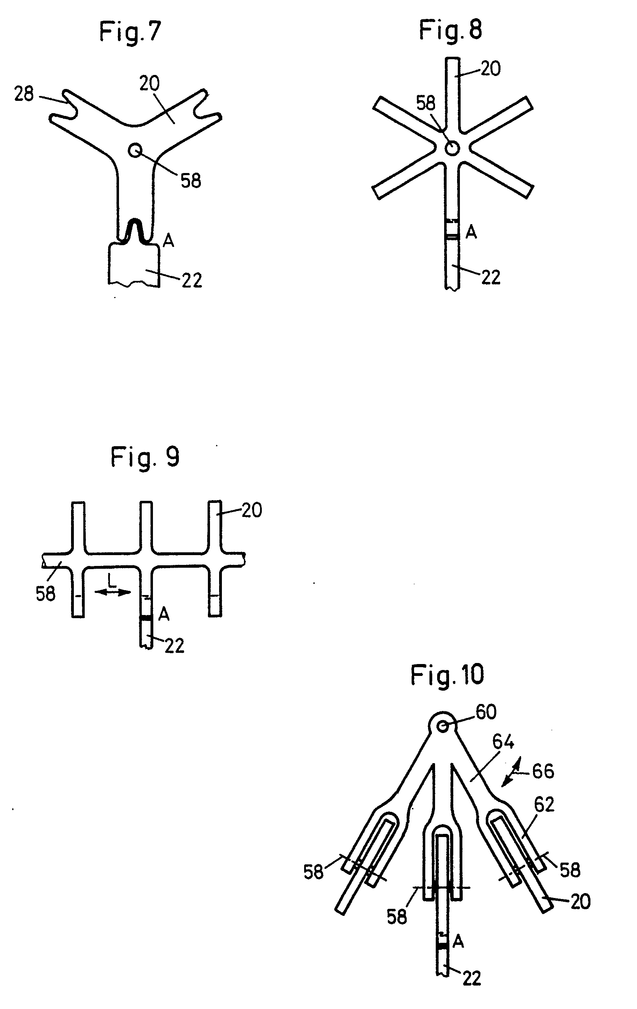

Bei den nachfolgenden Fig. 7 bis 10 wird davon ausgegangen, dass anstelle eines schnell auswechsel baren Werkzeugstössels der Crimper mehrteilig ausgebildet ist. Dadurch kann, bei einer nach wie vor auswechselbaren Trägerbandführung (18 in Fig. 1), der Raumbedarf erheblich herabgesetzt und die Crimpmaschine als ganzes vereinfacht werden. Ein Schnellverschluss wäre wohl möglich, in der industriellen Praxis dürfte jedoch aus Kostengründen meist darauf verzichtet werden.

Fig. 7 zeigt eine einstückig ausgebildete, windradartig angeordnete Gruppe von drei Crimpern 20, welche um eine Drehachse 58 drehbar sind.

Der vertikal liegende Crimper 20 ist in Arbeitsposition A, die Crimpprofile 28 der Verschleissteile 20, 22 liegen ineinander.

Bei einem Defekt oder Programmwechsel wird die Gruppe von drei einstückigen Crimpern um 120° gedreht und/oder die Trägerbandführung mit dem Amboss 22 gleichzeitig ausgewechselt.

Fig. 8 zeigt eine Gruppe von sechs Crimpern, welche um die zugeordnete Drehachse 58 gedreht werden können. Im Gegensatz zu Fig. 7 verläuft die Drehachse 58 nicht vertikal zu den Plattenflächen der wasserradartigen Crimper 20, sondern parallel dazu. In Arbeitsposition A greifen die Crimpprofile der Verschleissteile, eines Crimpers 20 und eines Ambosses 22, ineinander. Ein allfälliges Auswechseln erfolgt analog zu Fig. 7.

In Fig. 9 sind mehrere Gruppen von Crimpern 20 gemäss Fig. 7 auf einer gemeinsamen Drehachse 58 angeordnet. Eine Gruppe besteht hier, nicht sichtbar, aus vier Crimpern 20. Durch Verschiebung der Drehachse 58 in ihrer Längsrichtung L kann eine andere Gruppe von Crimpern 20 in die Arbeitsposition A gebracht werden. Die Crimper 20 von verschiedenen Gruppen sind seitlich versetzt, was in Fig. 9 nicht zum Ausdruck kommt.

Selbstverständlich können auch Gruppen von Crimpern 20 gemäss Fig. 8 auf einer gemeinsamen Drehachse 58 gemäss Fig. 9 angeordnet sein. In diesem Fall ist eine seitliche Versetzung nicht notwendig.

Mit einer Anordnung gemäss Fig. 9 können 12 bzw. 18 gleiche oder verschiedene Crimpprofile 28 ohne einen Wechsel des Crimpwerkzeugs bzw. Werkzeugstössels zum Einsatz gebracht werden.

In der Anordnung gemäss Fig. 10 sind drei Gruppen von Crimpern 20 um eine Drehachse 60 schwenkbar, welche vertikal zu den Drehachsen 58 verläuft. Die Traggabeln 62 der Gruppen von je fünf Crimpern 20 sind über Achsschenkel 64 mit der Drehachse 60 verbunden.

Durch Schwenken in Richtung des Pfeils 66 der Crimper 20 können andere Gruppen in Arbeitsposition A gebracht werden.

Mit der Anordnung gemäss Fig. 10 sind 15 gleiche oder verschiedene Crimpprofile ohne Wechsel des Werkzeugstössels verwendbar. Je nach Situation kann jeweils die Trägerbandführung 18 mit dem Amboss 22 ausgewechselt werden oder nicht.

Nach weiteren, in der Zeichnung nicht dargestellten, aber ohne weiteres verständlichen Ausführungsformen der Erfindung können
- bei einem auswechselbaren Werkzeugstössel (16 in Fig. 1) die Ambosse (22 in Fig. 1 bis 3 und 7 bis 10) analog den Crimpern (20 in Fig. 7 bis 10) dreh- und/oder verschiebbar sein,
- die Crimper (20) und die Ambosse (22) dreh- und/oder verschiebbar sein, gleichzeitig oder nacheinander.

Schliesslich können bei einem isolierten Kabel, zeichnerich ebenfalls nicht dargestellt, der Draht oder die Litze und die Isolationsschicht gleichzeitig gecrimpt werden, wobei das Werkzeug zwei Sätze von Verschleissteilen mit entsprechend verschieden grossen Arbeitsdimensionen hat.

## Ansprüche

1. Crimpmaschine mit wenigstens einem in eine programmgesteuert antreibbare Presse eingebauten Crimpwerkzeug (10), das im wesentlichen einen über eine Sockelplatte (14) lösbar mit der Presse verbundenen Ständer (12) als Stösselführung, einen Werkzeugstössel (16) als Crimperträger und eine Trägerbandführung (18) als Ambossträger umfasst,
gekennzeichnet durch
ein Crimpwerkzeug (10) mit über Verschlüsse, insbesondere über Schnellverschlüsse, an der Stösselführung (12, 14) befestigten, einzeln auswechselbaren Werkzeugstössel (16) und/oder Trägerbandführung (18), welche/r mittels Präzisisionsführungen und -anschlägen positionierbar ist/sind.

2. Crimpmaschine nach Anspruch 1, dadurch gekennzeichnet, dass die Trägerbandführung (18) einen eingeklemmten, beim ersten Crimpschlag in dessen Längsrichtung verschiebbaren Amboss (22) hat.

3. Crimpmaschine nach Anspruch 2, dadurch gekennzeichnet, dass der Amboss (22) längsverschiebbar in einer Nut, insbesondere einer Schwalbenschwanznut (26), auf dem Nutenboden längsverschiebbar eingeklemmt ist.

4. Crimpmaschine nach einem der Ansprüche 1 bis 3, dadurch gekennzeichnet, dass sie Transportmittel (32) zum automatisierten Auswechseln, Ab- und Zuführen der Werkzeugstössel (16) und/oder Trägerbandführungen (18) aufweist.

5. Crimpmaschine nach Anspruch 4, dadurch gekennzeichnt, dass das/die Transportmittel (32) ein wenigstens teilweise flexibler heb-, senk- und schwenkbarer Ladetunnel (34, 38) mit einer Zug- oder Stossvorrichtung, wie einem Seilzug oder einer pneumatischen Rohrförderung, ist/sind.

6. Crimpmaschine nach Anspruch 5, dadurch gekennzeichnet, dass die dem Crimpwerkzeug (10) direkt oder über Transportmittel (32) zugeführten Werkzeugstössel (16) und/oder Trägerbandführungen (18) anwählbar in verschiebbaren Magazinfächern (40) gelagert sind, wobei für Werkzeugstössel (16) Trommelmagazine (39), für Trägerbandführungen (18) Liftschachtmagazine (42) bevorzugt sind.

7. Crimpmaschine nach einem der Ansprüche 1 bis 6, dadurch gekennzeichnet, dass die Haspeln (46) der in arbeitenden und gelagerten Trägerbandführungen (18) befestigten Trägerbänder (24) unverschiebbar gelagert sind, vorzugsweise im Bereich der Raumdecke (52), und die Trägerbänder (24) mit schwenkbaren Ausgleichsrollen (56) gespannt sind.

8. Crimpmaschine nach einem der Ansprüche 1 bis 7, dadurch gekennzeichnet, dass der/die an der Stösselführung (12,14) befestigten Werkzeugstössel (16) der Crimpwerkzeuge (10) wenigstens eine Gruppe von einzeln in eine justierbare Position dreh- und/oder verschiebbaren Crimpern (20) mit dem Amboss (22) entsprechendem Crimpprofil (28) umfasst/umfassen.

9. Crimpmaschine nach Anspruch 8, dadurch gekennzeichnet, dass eine Gruppe zwei bis sechs, vorzugsweise drei bis fünf Crimper (20) aufweist.

10. Crimpmaschine nach Anspruch 8 oder 9, dadurch gekennzeichnet, dass die Crimper (20) als Schwenkarm oder sternförmig mit zentraler Drehachse (58) ausgebildet sind, wobei die Drehachse (58) parallel oder senkrecht zu den Plattenflächen der Crimper (20) verläuft.

11. Crimpmaschine nach einem der Ansprüche 8 bis 10, dadurch gekennzeichnet, dass die Crimper (20) einzeln lösbar angeordnet, vorzugsweise in Adaptergabeln, oder einstückig ausgebildet sind.

12. Crimpmaschine nach einem der Ansprüche 8 bis 11, dadurch gekennzeichnet, dass mehrere Gruppen von je um eine Achse (58) drehbaren Crimpern (20) über Traggabeln (62) und Achsschenkel (64) mit einer gemeinsamen, vertikal zu den Achsen (58) der Gruppen verlaufenden Drehachse (60) verbunden sind.

13. Crimpmaschine nach einem der Ansprüche 8 bis 11, dadurch gekennzeichnet, dass mehrere Gruppen von Crimpern 20, starr auf einer in deren Längsrichtung (L) verschiebbaren Drehachse (58) angeordnet sind.

14. Crimpmaschine nach Anspruch 8 oder 9, dadurch gekennzeichnet, dass eine Gruppe von Crimpern (20) starr auf einem dreh- und schwenkbaren Kugelkopf angeordnet ist.

15. Crimpmaschine nach Anspruch 8 oder 9, dadurch gekennzeichnet, dass eine Gruppe von Crimpern (20) in einer linearen, parallel zu den Plattenflächen verlaufenden Führung verschiebbar ist.

16. Verfahren zum Auswechseln wenigstens eines Verschleissteils (20, 22) des Crimpwerkzeugs/der Crimpwerkzeuge (10) in einer Crimpmaschine nach einem der Ansprüche 1 bis 15, dadurch gekennzeichnet, dass die Verschlüsse des/der betreffenden Werkzeugteils/Werkzeugteile (16, 18) geöffnet, der/die Werkzeugteil/e (16, 18) direkt oder über Transportmittel (32) in ein leeres Magazinfach (40) geführt, das/die verschiebbare/n Magazinfach/Magazinfächer (40) mit dem/den einzuwechselnden Werkzeugteil/en (16, 18) angewählt, dieser/diese direkt oder über Transportmittel (32) zur betreffenden Stösselführung geleitet, positioniert und mit den Schnellverschlüssen befestigt wird/werden, wobei alle Verfahrensschritte zum Auswechseln der als Werkzeugteile bezeichneten Werkzeugstössel (16) und Trägerbandführung (18) voll automatisiert, wenigstens in bezug auf die Endlage der eingesetzten Werkzeugteile (16, 18) durch Sensoren kontrolliert, durchgeführt werden.

17. Verfahren nach Anspruch 16 mit einem Werkzeugstössel der wenigstens eine Gruppe von Crimpern aufweist, dadurch gekennzeichnet, dass bei stationärem Werkzeugstössel ein zu ersetzender Crimper sensor- oder programmgesteuert weg- und ein neuer Crimper zugeschwenkt und/oder zugeschoben und positioniert wird.

18. Verfahren nach Anspruch 16 oder 17, dadurch gekennzeichnet, dass ein in einer Nut (26) eingeklemmter, auf dem Nutenboden längsverschiebbarer Amboss (22) mit dem ersten Crimpschlag einjustiert wird.

## Fig. 1

P

16

12

10

20

24

22

18

14

## Fig. 2

28

20

30

22

26

18

## Fig. 3

22    26

18

30

Fig. 4

Fig. 5

Fig. 6

Fig.7

Fig.8

Fig. 9

Fig.10

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0263614 (STRATOFLEX)<br>* Spalte 7, Zeilen 7 - 50; Figuren 1-9 *<br>--- | 1, 16 | H01R43/058 |
| A | EP-A-0128487 (TRUMPF)<br>* Seite 5, Zeilen 14 - 18 *<br>* Seite 6, Zeilen 1 - 23; Figuren 1-6 *<br>----- | 1, 16 | |

| RECHERCHIERTE SACHGEBIETE (Int. Cl.5 ) |
|---|
| H01R<br>B21D |

Der vorliegende Recherchenbericht wurde für alle Patentansprüche erstellt

| Recherchenort | Abschlußdatum der Recherche | Prüfer |
|---|---|---|
| DEN HAAG | 29 NOVEMBER 1990 | CERIBELLA G. |